# FASCICULE DE BREVET EUROPEEN

(11) **EP 2 380 699 B1**
(45) Date de publication et mention de la délivrance du brevet: **20.03.2013**
(21) Numéro de dépôt: 10161024.4
(22) Date de dépôt: 26.04.2010
(51) Int. Cl.: B23Q 39/04, B23B 9/00

(54) **Indexage d'un barillet d'un tour multibroches**
Indexierung einer Mehrspindeldrehmaschine
Indexing of a multispindle lathe

(43) Date de publication de la demande: 26.10.2011
(73) Titulaire: Tornos SA, 2740 Moutier (CH)
(72) Inventeur: Vettori, Marco, 2732 Loveresse (CH)
(74) Mandataire: BOVARD AG

(56) Documents cités:
- EP-A1- 0 726 119
- EP-A1- 1 757 404
- WO-A1-02/45902
- US-A- 5 095 789

## Description

L'invention se rapporte à un système d'indexage d'un barillet d'une machine-outil. L'invention se rapporte également à une machine-outil comprenant ce système d'indexage.

On connait des machines-outils, telles que décolleteuses, qui comprennent des broches multiples pour recevoir la matière à usiner. Celle-ci se présente généralement sous forme d'une barre ou de lopins. Les broches sont généralement agencées afin de tourner avec la matière à usiner autour d'un axe.

Les broches sont généralement situées au moins partiellement dans un barillet qui est donc autour de ces broches. Dans certaines solutions, un barillet comprend six broches, chaque broche étant séparée angulairement de 60 degrés. Une machine-outil comprenant un tel barillet peut également comprendre six postes de travail. Chaque poste de travail est équipé d'un ou plusieurs outils pour usiner la matière retenue par les broches. Pour rendre l'opération d'usinage plus efficace, chaque poste de travail peut usiner simultanément la matière retenue par une broche.

Souvent dans les solutions connues l'indexage du barillet n'est pas effectué d'une manière optimale. Par l'indexage on comprend l'opération de positionner le barillet à l'endroit angulaire voulu. Beaucoup de solutions connues possèdent un mécanisme d'entrainement du barillet assez complexe et ce mécanisme d'entraînement ne permet le positionnement du barillet qu'à certaines positions définies. Dans le cas du barillet à six broches, ces positions sont donc séparées angulairement de 60 degrés.

De plus, les solutions connues possèdent souvent un mécanisme de verrouillage/déverrouillage du barillet assez complexe. Ce mécanisme est souvent indépendant du système d'entraînement, ce qui rend la machine-outil inutilement complexe.

EP-0726119 montre une machine-outil avec un système d'indexage d'un barillet selon le préambule de la revendication 1.

L'objet de la présente invention est de surmonter les problèmes des solutions connues. La présente invention propose donc une solution de l'indexage et/ou du verrouillage/déverrouillage d'un barillet d'une machine-outil comme expliqué plus en détail plus loin.

A cet effet, l'invention a pour objet un système d'indexage selon la revendication 1.

L'utilisation de ce type de système pour une machine-outil permet de diminuer le nombre de pièces mécaniques de la machine, et donc de diminuer les coûts. Cela signifie aussi que le temps de montage de l'organe bâti-barillet est diminué par la diminution du nombre de pièces. La solution proposée permet également d'utiliser un axe de machine précédemment improductif en un axe de travail, sans augmenter le prix de revient de la machine.

La solution permet aussi d'augmenter considérablement la précision ou la capacité de la machine sur une broche ou un poste donné sans avoir à renchérir le produit et d'augmenter la précision ou la capacité globale de la machine sans avoir à améliorer la précision des différents composants qui la constituent. De plus le système proposé permet de produire des pièces à haute complexité, nécessitant un nombre d'outils importants, sans avoir recours à une machine ayant plus de broches ou de coulisses.

L'invention a également pour objet une machine-outil comprenant le système d'indexage.

Les autres aspects de la présente invention se trouvent dans les revendications dépendantes.

L'invention sera bien comprise à la lecture de la description ci-aprés faite à titre d'exemple non limitatif en regardant les dessins ci-annexés qui représentent schématiquement :
- figure 1 : en perspective et vue de coupe partielle, un système d'entraînement d'un barillet selon un mode de réalisation de la présente invention,
- figure 2 : en perspective, un mécanisme d'entrainement du barillet selon un mode de réalisation de la présente invention, et
- figure 3 : en perspective et vue de coupe partielle, un système d'entraînement du barillet avec un boîtier selon un mode de réalisation de la présente invention.

En se reportant aux dessins, un mode de réalisation non limitatif d'un mécanisme d'entraînement du barillet d'une machine-outil multibroches conformément à la présente invention est maintenant expliqué plus en détail.

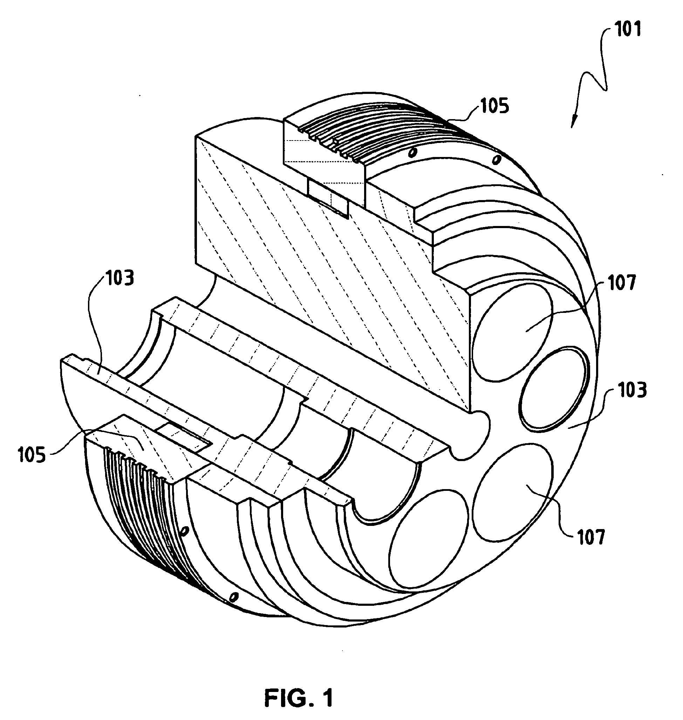

La figure 1 représente une vue en perspective et coupe partielle d'un système d'entraînement ou d'indexage 101 d'un barillet 103 d'une machine-outil pour indexer le barillet 103. La machine-outil comprend aussi au moins un système-outil (non illustré sur les figures) comprenant des postes de travail ou l'unité de l'usinage, dont le nombre peut être égal, supérieur ou inférieur, au nombre des broches dans le barillet 103. Un système-outil est un ensemble fonctionnel utilisé pour réaliser des opérations d'usinage sur une pièce portée par la broche de la machine-outil.

Le système-outil est, d'une part, équipé d'une pluralité d'outils d'usinage qui sont destinés à être guidés et déplacés dans différents plans déterminés pour autoriser l'usinage complexe de la pièce et, d'autre part, placé sous l'influence d'au moins une unité de commande, par exemple numérique.

Dans cet exemple le mécanisme d'entraînement 105 est un moteur couple qui est donc utilisé en lieu et place d'un système d'indexage mécanique traditionnel d'un barillet de machine-outil multibroches. Sur la figure 1 on voit également des trous 107 pour recevoir des broches (non illustrées sur les figures) qui sont agencées afin de porter les pièces à usiner. Pour assurer leur fonction, les broches sont normalement entraînées en rotation autour d'un axe prédéterminé pour faire tourner les pièces à usiner. Le mécanisme d'entraînement pour les broches est indépendant du moteur couple 105 du barillet 103. Le barillet 103 illustré sur la figure 1 est agencé afin de recevoir six broches.

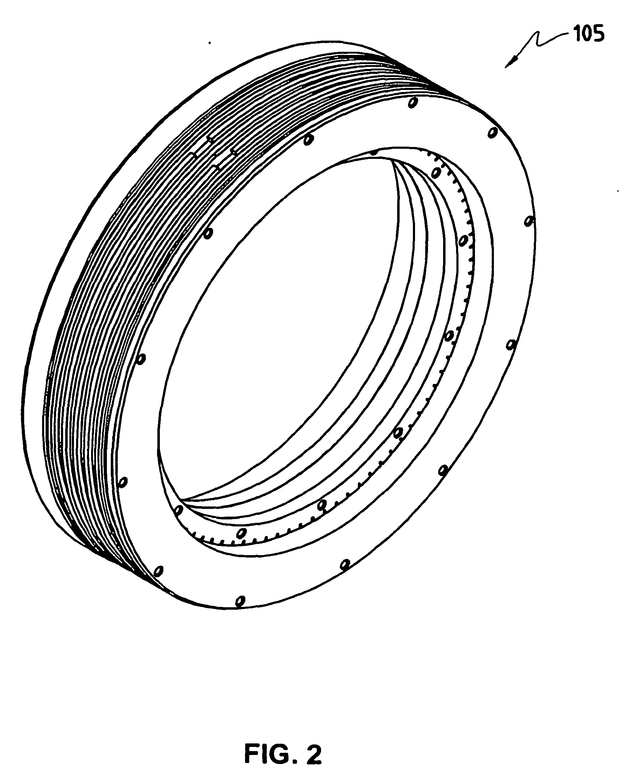

Le moteur couple 105, illustré aussi sur la figure 2, se trouve donc autour du barillet 103 et peut donc être considéré comme intégré à celui-ci.

Les moteurs couples sont une catégorie spéciale de servomoteurs sans balais à aimants permanents communément appelés moteurs sans balais à courant continu ou moteurs synchrones à aimants permanents. La charge est directement montée sur le rotor sans l'intermédiaire d'éléments de transmission. Les moteurs couples sont donc classés comme une solution pour entraînement direct.

Le couplage direct de la charge sur le rotor élimine le besoin d'éléments de transmission tels que les courroies d'entrainement, engrenages, réducteurs de vitesse, engrenages à vis sans fin, croix de Malte ou Manifold. Contrairement aux moteurs à balais, il n'y a aucun contact avec les pièces en mouvement dans un système à entraînement direct. Il n'y a donc aucune usure mécanique, ce qui signifie une excellente fiabilité et une longue durée de vie. La réduction du nombre de composants mécaniques minimise donc la maintenance et réduit le coût du système. La technologie de l'entraînement direct propre aux systèmes basés sur des moteurs couples assure un ensemble performant et efficace.

Selon le point de vue, un moteur couple est soit un servomoteur classique avec un grand nombre de pôles ou un moteur linéaire enroulé. Grâce à ce grand nombre de pôles, les moteurs couples peuvent atteindre des couples élevés à faibles vitesses. Le design d'un moteur couple est compact avec des paquets de tôles étroits et un large arbre creux. Les moteurs couple sont des moteurs «sans châssis». Cela signifie qu'ils ne possèdent pas de roulements, d'habillage, ou d'équipement de retour de signal.

Les moteurs couples génèrent un couple élevé à vitesse modérée, ou lorsque le moteur est à l'arrêt. Contrairement aux entraînements traditionnels, le dimensionnement d'un moteur couple est exclusivement basé sur le couple (et non sur la puissance). Le couple de pointe détermine le couple maximal que le moteur peut physiquement produire.

Selon ce mode de réalisation de la présente invention, le moteur couple 105 est utilisé en lieu et place d'un système d'indexage mécanique d'un barillet de machine multibroches. Comme le moteur couple 105 selon la présente invention peut aussi être utilisé comme un mécanisme de verrouillage/déverrouillage du barillet 103, ce moteur couple 105 peut donc être utilisé en lieu et place d'un système de verrouillage traditionnel d'un barillet de machine multibroches. Par conséquent, le moteur couple 105 selon la présente invention peut être utilisé en lieu et place d'un système d'indexage et d'un système de verrouillage d'un barillet de machine multibroches. Ce moteur couple peut avantageusement remplacer ces deux mécanismes.

Ce moteur couple 105 permet aussi de réaliser un axe de travail supplémentaire sur une machine de type multibroches grâce au fait de pouvoir positionner le barillet 103 à n'importe quelle position angulaire. Le moteur couple 105 permet également le positionnement angulaire précis d'une broche quelconque sur un poste de travail précis. Ce poste devient donc un poste de précision, car l'erreur dans la position de n'importe quelle broche sur ce poste spécifique peut être éliminée.

Le moteur couple 105 permet aussi le positionnement angulaire précis d'une broche définie sur un poste quelconque. Cette broche devient donc une broche de précision, car l'erreur dans la position de cette broche spécifique sur n'importe quel poste peut être éliminée.

Il est aussi possible de mesurer à une position spécifique du barillet 103 l'erreur de positionnement d'au moins deux broches par rapport au poste de travail correspondant et calculer une erreur moyenne. Cette erreur moyenne peut selon la présente invention être utilisée pour permettre le positionnement angulaire moyen d'une broche c uelconque sur un poste quelconque.

L'utilisation du moteur couple 105 permet également la multiplication des postes de travail indépendamment du nombre de broches. C'est-à-dire on peut chois r l'angle (les angles) d'indexage du barillet en plus ou en moins par rapport aux postes fixes. On pourrait par exemple envisager une solution qui comprend six broches et 12 postes de travail. Dans ce cas-là, six postes de travail travaillent simultanément et six postes de travail sont en arrêt. On pourrait remplacer les outils des six postes de travail en même temps que les six autres postes de travail sont en train d'usiner. Dans ce cas-à, on pourrait indexer le barillet 30 degrés par rapport à la position précédente.

Le moteur couple 105 peut aussi être agencé afin d'indexer, simultanément au barillet, un ravitailleur ou un guide-barre d'une machine-outil. Il est aussi possible que le moteur couple (105) soit commandé synchrone avec un système d'entraînement identique monté sur un ravitailleur ou un guide-barre.

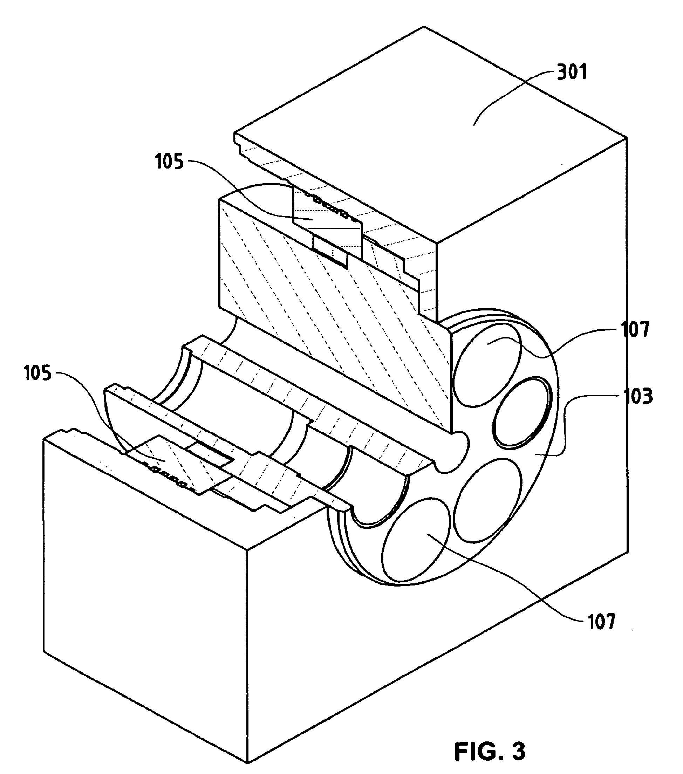

Sur la figure 3, on voit le système d'indexage 101 illustré sur la figure 1 placé dans un boîtier 301. Le but de ce boîtier 301 est de protéger le système d'indexage 101.

La solution décrite ci-dessus a de multiples applications dans les machines-outils. Par exemple la solution peut être utilisée sur une décolleteuse multibroches pour réaliser les fonctions décrites ci-dessus.

## Revendications

1. Un système d'indexage (101) d'un barillet (103) d'une machine-outil multibroches, le système (101) comprenant:
• un barillet (103) étant agencé afin de tourner autour d'un axe, le barillet (103) comprenant des trous (107) pour recevoir des broches ; et
• un mécanisme d'éntrainement (105) du barillet (103) qui se trouve autour du barillet (103) et qui est
agencé afin d'indexer le barillet (103) pour positionner angulairement le barillet (103) à n'importe quelle position angulaire en tournant autour dudit axe **caractérisé en ce que** le mécanisme d'entraînement (105) est un moteur couple (105) agencé afin de verrouiller le barillet (103) à ladite position.

2. Le système (101) selon la revendication 1 dans lequel le mécanisme d'entraînement (105) est intégré au barillet (103).

3. Le système (101) selon l'une quelconque des revendications précédentes, dans lequel le verrouillage est effectué par le mécanisme d'entraînement (105) sans utiliser un système supplémentaire de verrouillage.

4. Une machine-outil comprenant le système (101) selon l'une quelconque des revendications précédentes.

5. La machine-outil selon la revendication 4, dans laquelle la machine-outil comprend des postes de travail pour usiner une pièce, le nombre des postes de travail étant plus élevé que le nombre de broches.

6. La machine-outil selon la revendication 4, dans laquelle la machine-outil comprend des postes de travail pour usiner une pièce, le nombre des postes de travail étant moins élevé que le nombre de broches.

7. La machine-outil selon l'une quelconque des revendications précédentes, dans laquelle le mécanisme d'entrainement (105) sans un système supplémentaire de verrouillage est agencé afin de verrouiller le barillet (103) à ladite position.

## Claims

1. A system for indexing (101) a turret (103) of a multi-spindle machine tool, the system (101) comprising:
• a turret (103) designed to rotate about an axis, the turret (103) comprising holes (107) for receiving spindles; and
• a turret (103) drive mechanism (105) which is located around the turret (103) and which is designed to index the turret in order to position the turret (103) angularly in any angular position while rotating about said axis,
**characterised in that** the drive mechanism (105) is a torque motor designed to lock the turret (103) in said position.

2. The system (101) according to claim 1, wherein the drive mechanism (105) is integrated in the turret (103).

3. The system (101) according to any one of the preceding claims, wherein the locking is carried out by the drive mechanism (105) without using a supplementary locking system.

4. A machine tool comprising the system (101) according to any one of the preceding claims.

5. The machine tool according to claim 4, wherein the machine tool comprises work stations for machining a piece, the number of work stations being more than the number of spindles.

6. The machine tool according to claim 4, wherein the machine tool comprises work stations for machining a piece, the number of work stations being fewer than the number of spindles.

7. The machine tool according to any one of the preceding claims, wherein the drive mechanism (105) without a supplementary locking system is designed to lock the turret (103) in said position.

## Patentansprüche

1. Ein Indexierungssystem (101) für eine Trommel (103) einer Mehrspindelwerkzeugmaschine, das System (101) umfassend:
• eine derart eingerichtete Trommel (103), dass sie sich um eine Achse dreht, die Trommel (103) umfassend Löcher (107) zur Aufnahme der Spindeln, und
• einen Antriebsmechanismus (105) für die Trommel (103), welcher sich um die Trommel (103) herum befindet, und welcher zum Indexieren der Trommel (103) eingerichtet ist, um die Trommel (103) während des Drehens um die genannte Achse winkelmässig an eine beliebige Winkelposition zu positionieren,
**dadurch gekennzeichnet, dass** der Antriebsmechanismus (105) ein zur Verriegelung der Trommel (103) an der genannten Position eingerichteter Momentmotor (105) ist.

2. Das System (101) gemäss dem Anspruch 1, in welchem der Antriebsmechanismus (105) in der Trommel (103) integriert ist.

3. Das System (101) gemäss einem der vorangehenden Ansprüche, in welchem die Verriegelung durch den Antriebsmechanismus (105) ohne Verwendung eines zusätzlichen Verriegelungssystems durchgeführt ist.

4. Eine Werkzeugmaschine umfassend das System (101) gemäss einer der vorangehenden Ansprüche.

5. Die Werkzeugmaschine gemäss Anspruch 4, in welcher die Werkzeugmaschine Arbeitsstationen zur Bearbeitung eines Werkstücks umfasst, wobei die Anzahl der Arbeitsstationen grösser ist als die Anzahl der Spindeln.

6. Die Werkzeugmaschine gemäss Anspruch 4, in welcher die Werkzeugmaschine Arbeitsstationen zur Bearbeitung eines Werkstücks umfasst, wobei die Anzahl der Arbeitsstationen kleiner ist als die Anzahl der Spindeln.

7. Die Werkzeugmaschine gemäss einem der vorangehenden Ansprüche, in welcher der Antriebsmechanismus (105) ohne ein zusätzliches Verriegelungssystem eingerichtet ist, um die Trommel (103) an der genannten Position zu verriegeln.
